# EUROPÄISCHE PATENTSCHRIFT

(11) **EP 2 784 313 B1**
(45) Veröffentlichungstag und Bekanntmachung des Hinweises auf die Patenterteilung: **27.06.2018**
(21) Anmeldenummer: 13005714.4
(22) Anmeldetag: 09.12.2013
(51) Int. Cl.: F04B 1/12, F04B 53/14, F03C 1/28, F01B 3/00

(54) **Kolben für eine Axialkolbenmaschine**
Piston for an axial piston machine
Piston pour une machine à pistons axiaux

(30) Priorität: 25.03.2013 CH 6612013
(43) Veröffentlichungstag der Anmeldung: 01.10.2014
(73) Patentinhaber: Liebherr Machines Bulle SA, 1630 Bulle (CH)
(72) Erfinder: Baeriswyl, Mario, 3186 Düdingen (CH); Feusi, Erwin, 3185 Schmitten (CH)
(74) Vertreter: Laufhütte, Dieter

(56) Entgegenhaltungen:
- EP-A1- 0 504 780
- DE-A1- 2 653 867
- DE-A1- 10 135 489
- DE-A1- 10 158 111
- US-A- 4 191 095

## Beschreibung

Die vorliegende Erfindung betrifft einen Kolben für eine Axialkolbenmaschine. Insbesondere kann es sich dabei um Kolben für eine Axialkolbenmaschine in Schrägscheibenbauart oder in Taumelscheibenbauart handeln.

Bei bekannten Axialkolbenmaschinen werden zum einen Massivkolben eingesetzt, welche einem Betrieb mit höheren Drehzahlen jedoch Grenzen setzen. Denn bei erhöhten Drehzahlen ergeben sich aufgrund der großen Fliehkräfte Festigkeitsprobleme für die Zylinder, und aufgrund der großen Massenkräfte Festigkeitsprobleme für die Kolben-Rückhalteinrichtung. Weiterhin können thermische Probleme an den Berührungsflächen zwischen Kolben und Zylindern entstehen, da aus den Fliehkräften hohe Reibungskräfte resultieren.

Als Alternative zu Massivkolben werden daher Hohlkolben eingesetzt, um Axialkolbenmaschinen mit erhöhter Drehzahl zu betreiben. Bei üblichen Hohlkolben weist der Hohlkolbenkörper dabei einen zum Arbeitszylinder hin offenen Hohlraum auf. Dies hat jedoch den Nachteil, dass der Hohlraum einen Totraum bildet, welcher bei jedem Kolbenhub komprimiert und dann wieder entspannt wird. Die nicht zu vernachlässigende Kompressibilität des Hydraulikfluides hat dabei zur Folge, dass dies zu einer Verschlechterung des Wirkungsgrades führt.

Daher ist es aus verschiedenen Druckschriften wie der US 3.319.575 A, der DE 199 34 217 A1 sowie der DE 2 364 725 A1 bekannt, den im Kolbenkörper vorgesehenen Hohlraum druckdicht zu verschließen. Dabei ist als Hohlraum jeweils ein Ringraum vorgesehen, welcher sich zwischen einer äußeren zylindrischen Hülse und einer zentralen Säule erstreckt. Die zylindrische äußere Hülse und die zentrale Säule sind auf ihrer, dem Zylinderraum zugewandten Stirnseite, mit einem Endverschluss versehen, welcher den ringförmigen Hohlraum zur Arbeitsseite des Kolbens hin abschließt. In der zentralen Säule verläuft dabei eine axiale Druckdurchführung, welche der Schmierung des Gleitschuhs des Kolbens dient.

Eine solche Ausführung des Kolbens kann jedoch insbesondere bei dem üblicherweise verwendeten Reibschweißen zum Anbringen des Verschlusses zu Problemen führen, da die Zentralsäule stark belastet wird. Zudem ist die Herstellung des ringförmigen Hohlraumes durch Fließpressen aufwendig. Aus der DE 36 02 651 A1 ist es daher bekannt, den für die Verringerung der Masse vorgesehenen Hohlraum insgesamt hohlzylindrisch auszuführen, und den Flüssigkeitsführungskanal für die Schmierölversorgung in der Kolbenmantelwand verlaufen zu lassen. Allerdings erfordert dies wiederum eine aufwendige Gestaltung der Kolbenwand, und führt zudem zu Stabilitätsproblemen beim Kolben.

Aus der DE 197 06 075 C2 ist wiederum bekannt, den Kolben aus einem Außenrohr und einem Innenrohr zu fertigen, welche als Rohteile jeweils hohlzylinderförmig sind, wobei der Rohling für das Außenrohr durch Verformen in seinen Endbereichen am Innenrohr anliegt, so dass sich im Kolbenkörper wiederum ein Ringraum bildet. Weiterhin wird auch die Kugel für eine Kugelgelenkverbindung mit einem Gleitschuh durch Verformen des Rohlings für das Außenrohr gefertigt werden, wodurch sich auch im Kugelkopf ein ringförmiger Hohlraum ergibt. Doch auch liegt ein kompliziertes Herstellungsverfahren für den Kolben vor, ohne dass eine ausreichende Stabilität des Kolbens gewährleistet würde.

Die US 4,191,195 offenbart einen Kolben für eine Axialkolbenmaschine mit einem Hohlraum, dessen Kammern in Längsrichtung hintereinander liegen.

Ein weiterer Kolben für eine Axialkolbenmaschine ist aus der DE 101 35 489 A1 bekannt. Der Kolben umfasst einen durchgängigen Hohlraum, wobei ein koaxial angeordneter Stab über einen Steg mit der Kolbenwandung verbunden ist.

Ein weiteren Kolben offenbart die EP 05 047 80 A1, der in seinem Inneren ein oder zwei Füllstücke umfasst.

Aufgabe der vorliegenden Erfindung ist es daher, einen Kolben für eine Axialkolbenmaschine zur Verfügung zu stellen, welcher die Vorteile eines Vollkolbens und eines Hohlkolbens verbindet, einfach herstellbar ist und ausreichend stabil ist.

Diese Aufgabe wird erfindungsgemäß durch einen Kolben gemäß Anspruch 1 gelöst.

Die vorliegende Erfindung zeigt dabei einen Kolben für eine Axialkolbenmaschine mit einem Kolbenkörper, welcher in seinem Inneren einen druckdicht verschlossenen Hohlraum aufweist. Der Hohlraum weist dabei mehrere Kammern auf. Hierdurch verbleiben zwischen den Kammern Stege, welche zu einer Stabilisierung des Kolbens führen.

Die Kammern können dabei jeweils separat druckdicht verschlossen sein, oder zumindest teilweise untereinander verbunden sein. Entscheidend ist lediglich, dass die Kammern insgesamt einen Hohlraum bilden, welcher druckdicht verschlossen ist.

Erfindungsgemäß sind die Kammern im Querschnitt des Kolbens nebeneinander angeordnet.

Weiterhin erstrecken sich die Kammern dabei axial im Kolbenkörper. In gleicher Weise erstrecken sich damit die Stege, welche zwischen den Kammern verbleiben, axial. Die Kammern sind dabei zur Arbeitsfläche des Kolbens hin entweder jeweils einzeln durch separate Verschlusselemente oder durch ein gemeinsames Verschlusselement verschlossen.

Damit wird bei Verwendung von separaten Verschlusselementen die dem Zylinderraum zugewandte Arbeitsfläche des Kolbens durch die Stirnseite des Basiselementes sowie die in diese Stirnseite eingefügten Verschlusselemente gebildet.

In einer bevorzugten Ausführungsform sind die Kammern hohlzylindrisch geformt. Dies erleichtert die Herstellung der Kammern. Die Grundfläche kann dabei bspw. kreisförmig, nierenförmig, vieleckig oder oval sein.

Insbesondere können die Kammern dabei durch ein materialabtragendes Verfahren herstellbar sein. Besonders bevorzugt kann es sich bei den Kammern dabei um Bohrungen handeln. Insbesondere können die Bohrungen den Kolbenkörper dabei axial durchsetzen.

In einer möglichen Ausführungsform der vorliegenden Erfindung kann der Kolbenkörper ein einstückiges Basiselement aufweisen, in welches die Kammern eingebracht sind. Insbesondere können sich die Kammern dabei von einer arbeitsseitigen Stirnseite des Basiselementes in dieses hinein erstrecken.

Alternativ kann der Kolbenkörper ein Mittelteil aufweisen, welches mit einem Basisteil verbunden wird. Bevorzugt sind die Kammern dabei in dem Mittelteil angeordnet. In einer besonders bevorzugten Ausführung weist dabei einzig das Mittelteil Kammern auf. Die Bereitstellung der Kammern durch das Mittelteil erlaubt eine kostengünstigere Herstellung des Kolbenkörpers.

Das Mittelteil kann dabei einstückig hergestellt oder aus mehreren Elementen zusammengesetzt werden.

Das Mittelteil und/oder die Elemente, aus welchen das Mittelteil hergestellt wird, werden bevorzugt zumindest teilweise durch einen Umformprozess hergestellt. Bevorzugt werden alle Elemente, aus welchen das Mittelteil hergestellt wird, durch einen Umformprozess hergestellt.

Die Herstellung des Mittelteils und/oder der Elemente, aus welchen das Mittelteil hergestellt werden, durch einen Umformprozess erfolgt bevorzugt durch Strangpressen, Kaltwalzen, im Pilgerschrittverfahren, Schmieden, Rollprofilieren. Besonders bevorzugt wird dabei Strangpressen eingesetzt.

Das Mittelteil und/oder die Elemente, aus welchen das Mittelteil hergestellt wird, können auch zumindest teilweise durch DMLS (Direct Metal Laser Sintern) hergestellt werden. Dabei werden das Mittelteil und/oder die Elemente durch punktweises Aufschmelzen aus einem pulverförmigen Grundmaterial drei-dimensional erzeugt. Bevorzugt werden alle Elemente, aus welchen das Mittelteil hergestellt wird, durch DMLS hergestellt.

Besteht das Mittelteil aus mehreren Elementen, so greifen diese bevorzugt ineinander ein. Der Eingriff kann dabei in radialer Richtung und/oder in axialer Richtung erfolgen.

Beispielsweise kann das Mittelteil durch ein Rohrelement gebildet werden, in dessen Inneren ein Kernelement so angeordnet ist, dass es zusammen mit dem Rohrelement mehrere Kammern bildet.

Bevorzugt kontaktiert das Kernelement die Innenfläche des Rohrelementes dabei in mehreren, axial oder radial verteilten Bereichen. Insbesondere kann das Kernelement dabei mehrere Stege aufweisen, welche die Innenfläche des Rohrelementes kontaktieren.

Bevorzugt handelt es sich bei den Stegen um Längsstege. Weiterhin handelt es sich bei dem Kernelement bevorzugt um ein Element mit einem in Längsrichtung gleichbleibenden Profil.

Alternativ kann das Profilelement auch in axialer Richtung Stege aufweisen. Bevorzugt ist das Profilelement in diesem Fall in axialer Richtung aus mehreren Elementen zusammengesetzt.

Weiterhin ist auch eine Kombination aus einer radialen und einer axialen Struktur möglich.

Vorteilhafterweise ist das Mittelteil so mit dem Basisteil verbunden, dass das Basis teil zu der Kontaktfläche des Mittelteils mit dem Basisteil offene Kammern verschließt.

Das Basisteil kann dabei als Verbindungselement mit einem Gleitschuh dienen. Insbesondere kann das Basisteil dabei eine Hälfte eines Kugelgelenkes bilden.

Unabhängig von der Herstellung des Kolbenkörpers können die Kammern bei der Herstellung zunächst zur Arbeitsfläche des Kolbens hin offen sein. den separaten Verschlusselementen kann es sich beispielsweise um Stopfen handeln, welche kraftschlüssig in die arbeitsseitigen Enden der Kammern eingepresst werden. Alternativ kann es sich auch um Schraubelemente handeln, welche in diese Enden eingeschraubt werden. Bei dem gemeinsamen Verschlusselement kann es sich um eine die Arbeitsfläche des Kolbens bildende Endkappe handeln.

Bei dieser Ausführungsform liegt die Verbindungsfläche zwischen dem Basiselement und der Endkappe damit auf einer die Mantelfläche des Kolbens schneidenden Ebene, welche von der Arbeitsfläche zurückversetzt durch den Kolben verläuft.

In einer bevorzugten Ausführungsform können die Kammern dabei in die Endkappe hineinreichen und/oder zumindest teilweise in dieser angeordnet sein.

Die Endkappe kann mit dem Basiselement durch Formschluss, Kraftschluss und/oder Stoffschluss verbunden sein, bspw. durch Verschweißen.

Gemäß der vorliegenden Erfindung weist der druckdicht verschlossene Hohlraum des Kolbenkörpers mindestens zwei Kammern auf. Bevorzugt weist der Hohlraum jedoch mehr als drei, weiterhin bevorzugt mehr als vier Kammern auf.

Die Anzahl der Kammern ist dabei zunächst nicht nach oben oder unten begrenzt. Bevorzugt weist der Hohlraum jedoch weniger als 20, weiterhin bevorzugt weniger als zehn solcher Kammern auf.

Insbesondere kann der Hohlraum dabei zwischen fünf und acht, und insbesondere sechs Kammern aufweisen.

Vorteilhafterweise sind die Kammern dabei, wie bereits oben beschrieben, in ein Basiselement des Kolbenkörpers eingebracht. In einer ersten Ausführung ist das Basiselement einstückig ausgeführt. Hierdurch bestehen die zwischen den Kammern verlaufenden Stege ebenfalls aus dem Material des Basiselementes.

Die Kammern müssen dabei nicht zwingend druckdicht voneinander getrennt sein, sondern können beispielsweise im Bereich der Endkappe über diese miteinander in Verbindung stehen. Entscheidend ist lediglich, dass die Kammern nach außen hin druckdicht verschlossen sind, so dass sie während des Betriebs der Axialkolbenmaschine keinen Totraum bilden, welcher mit Hydraulikfluid befüllt ist.

In einer bevorzugten Ausführungsform können die Kammern um eine Mittelsäule des Kolbenkörpers angeordnet sein. Alternativ oder zusätzlich kann die Anordnung der Kammern symmetrisch zur Mittelachse des Kolbenkörpers erfolgen. Insbesondere können die Kammern die Mittelachse des Kolbenkörpers dabei ringförmig umgeben.

Durch die innerhalb dieser ringförmigen Anordnung der Kammern verbleibenden Stege zwischen den Kammern, welche sich radial und axial erstrecken, wird der Kolben erheblich stabilisiert.

In einer Ausführungsform der vorliegenden Erfindung ist der Kolbenkörper axial von einem Druckkanal durchsetzt. Dieser Druckkanal kann dabei von der Arbeitsseite des Kolbens zur Scheibenseite führen, und insbesondere der Schmierung und/oder Druckentlastung eines Gleitschuhs dienen. In einer bevorzugten Ausführungsform verläuft dieser Druckkanal dabei in einer Mittelsäule des Kolbenkörpers, um welchen herum die Kammern angeordnet sind.

Bei dem erfindungsgemäßen Kolben handelt es sich dabei bevorzugt um einen Gleitschuhkolben, wobei der Gleitschuh mit dem Kolbenkörper über ein Kugelgelenk verbunden ist.

Insbesondere kann der Kolbenkörper dabei eine halbkugelförmige Aussparung aufweisen, in welche ein teilkugelförmiger Teil des Gleitschuhs eingreift. Dabei kann der oben beschriebene Druckkanal in der halbkugelförmigen Aussparung enden. Bevorzugt weist dabei auch der Gleitschuh ebenfalls einen Druckkanal auf, welcher als Fortsetzung des Druckkanals im Kolbenkörper dient.

In einer alternativen Ausführung kann auch der Gleitschuh eine halbkugelförmige Aussparung aufweisen, in welche ein teilkugelförmiger Teil eingreift, welcher am hinteren Ende des Kolbenkörpers angeordnet ist. In diesem Fall endet der Druckkanal vorteilhafterweise in dem teilkugelförmigen Teils des Kolbenkörpers, und wird weiterhin vorteilhafterweise durch einen Druckkanal des Gleitschuhs verlängert, welcher in der halbkugelförmigen Aussparung beginnt.

Die vorliegende Erfindung umfasst weiterhin eine Axialkolbenmaschine mit einem oder mehreren Kolben, wie sie oben erfindungsgemäßen beschrieben wurden. Bei der Axialkolbenmaschine kann es sich dabei sowohl um eine hydraulische Pumpe, als auch um einen hydraulischen Motor handeln. Bevorzugt handelt es sich bei der Axialkolbenmaschine dabei um eine Schrägscheibenmaschine oder um eine Taumelscheibenmaschine. Weiterhin bevorzugt ist das Verdrängungsvolumen der Axialkolbenmaschine verstellbar.

Bei einer Axialkolbenmaschine in Schrägscheibenbauweise sind dabei die Schrägscheibe und die Steuerscheibe mit dem Gehäuse verbunden, d.h. sie können nicht mitrotieren, während der Zylinderblock der Triebwelle mitrotiert. Bei einer Taumelscheibenmaschine sind dagegen die Kolben in einem gehäusefesten Zylinderblock gelagert, während die Taumelscheibe und die Steuerscheibe mit der rotierenden Triebwelle verbunden sind. Bei Verstellmaschinen ist dabei die Schrägscheibe bzw. Taumelscheibe verschwenkbar an dem Gehäuse bzw. der Triebwelle angeordnet.

In beiden Fällen gleiten die dem Zylindervolumen abgewandten Enden der Kolben auf der Schräg- bzw. Taumelscheibe. Insbesondere kann dies dadurch erfolgen, dass dieses Ende der Kolben als Gleitschuh ausgeführt ist, welcher über ein Kugelgelenk mit dem Kolbenkörper in Verbindung steht.

Neben dem Kolben und einer erfindungsgemäßen Axialkolbenmaschine umfasst die vorliegende Erfindung weiterhin ein Verfahren zur Herstellung eines erfindungsgemäßen Kolbens, wie er oben beschrieben wurde. In einer ersten bevorzugten Ausführung des erfindungsgemäßen Verfahrens werden die Kammern dabei durch ein materialabtragendes Verfahren hergestellt.

Insbesondere können die Kammern dabei von der Seite der Arbeitsfläche des Kolbens her in ein Basiselement eingebracht werden.

Besonders bevorzugt werden die Kammern dabei durch Bohren hergestellt.

Alternativ kann der die Kammern umfassende Abschnitt des Kolbens, insbesondere ein Mittelteil des Kolbens, auch durch ein Umformverfahren hergestellt werden, insbesondere stranggepresst oder geschmiedet werden. Bevorzugt wird der Mittelteil dann mit einem Basisteil verbunden.

Weiterhin kann der Kolben durch Verbinden eines Mittelteiles, in welchem die Kammern angeordnet sind, mit einem Basisteil hergestellt werden. Bevorzugt kann das Mittelteil einstückig hergestellt oder aus mehreren Elementen zusammengesetzt werden.

Weiterhin kann auch ein Druckkanal des Kolbens durch ein materialabtragendes Verfahren, insbesondere durch Bohren, hergestellt werden.

Die Kammern im Kolbenkörper und insbesondere im Basiselement werden bevorzugt wie oben beschrieben mit einem oder mehreren Verschlusselementen verschlossen.

Bevorzugt erfolgt die Herstellung der Kolben dabei so, wie dies bereits oben im Hinblick auf den Kolben selbst dargestellt wurde.

Die vorliegende Erfindung wird nun anhand von Ausführungsbeispielen sowie Zeichnungen näher beschrieben.

### Dabei zeigen:

- Figur 1:: ein Ausführungsbeispiel einer erfindungsgemäßen Axialkolbenmaschine,
- Figur 2a:: eine Schnittansicht in axialer Richtung durch ein erstes Ausführungsbeispiel eines Kolbenkörpers eines erfindungsgemäßen Kolbens, bei welchem die Kammern durch ein materialabtragendes Verfahren hergestellt werden,
- Figur 2b:: eine Schnittansicht in axialer Richtung durch einen erfindungsgemäßen Kolben, bei welchem der in Figur 2a gezeigte Kolbenkörper durch einen Gleitschuh ergänzt wurde,
- Figur 2c:: eine Schnittansicht in radialer Richtung durch das in Fig. 2b gezeigte erste Ausführungsbeispiel eines Kolbenkörpers,
- Figur 3a:: eine Schnittansicht in axialer Richtung durch ein zweites Ausführungsbeispiel eines erfindungsgemäßen Kolbens, bei welchem die Kammern in einem Mittelteil angeordnet sind, welcher durch ein materialumformendes Verfahren hergestellt wurde,
- Figur 3b:: eine Schnittansicht in axialer Richtung durch einen erfindungsgemäßen Kolben, bei welchem der in Figur 3a gezeigte Kolbenkörper durch einen Gleitschuh ergänzt wurde,
- Figur 3c:: drei Schnittansichten in radialer Richtung durch mögliche Ausführungen des in Fig. 3a gezeigten zweiten Ausführungsbeispiels eines Kolbenkörpers,
- Figur 4a:: eine perspektivische Ansicht eines dritten Ausführungsbeispiels eines erfindungsgemäßen Kolbens, bei welchem die Kammern jeweils separat durch Verschlusselemente verschlossen sind,
- Figur 4b:: eine Schnittansicht in axialer Richtung durch das in Figur 4a gezeigte dritte Ausführungsbeispiel, und
- Figur 4c:: eine Schnittansicht in radialer Richtung durch das in Figur 4a gezeigte dritte Ausführungsbeispiel.

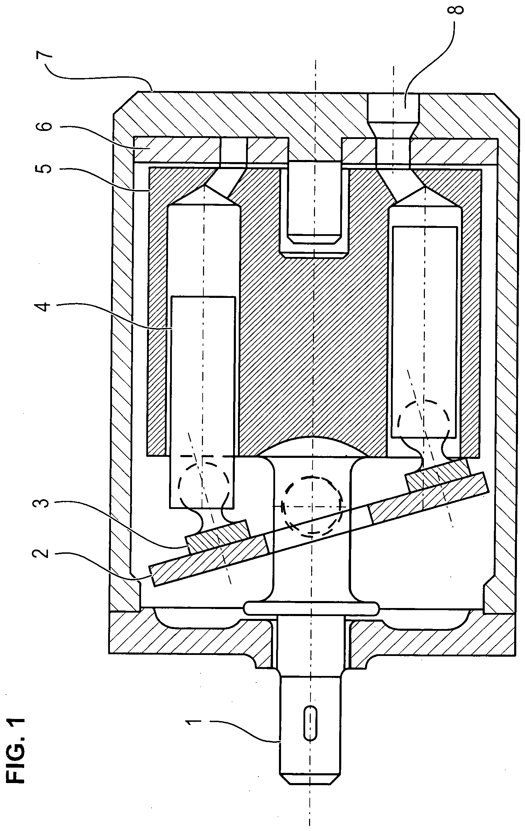

In Figur 1 ist ein Ausführungsbeispiel einer erfindungsgemäßen Axialkolbenmaschine gezeigt, bei welcher die erfindungsgemäßen Kolben zum Einsatz kommen.

Im Ausführungsbeispiel handelt es sich um eine Schrägscheibenmaschine, bei welcher der Zylinderblock 5 drehfest mit der Triebwelle 1 verbunden ist. Die Schrägscheibe 2 ist drehfest mit dem Gehäuse 7 verbunden, d.h. sie kann nicht mitrotieren. Da es sich im Ausführungsbeispiel um eine Verstellmaschine handelt, ist sie jedoch am Gehäuse schwenkbar angebracht. Die Kolben 4 stützen sich dabei auf der Schrägscheibe 2 ab. Die Steuerscheibe 6 ist ebenfalls drehfest mit dem Gehäuse 7 verbunden und steht mit der Druckleitung 8 in Verbindung.

Werden die Triebwelle 1 und mit ihr der Zylinderblock 5 in Drehung versetzt, so vollführen die Kolben eine Hubbewegung. Durch eine entsprechende Ausführung der Steueröffnungen in der Steuerscheibe 6 werden sie dabei abwechselnd mit der Hochdruckseite und der Niederdruckseite verbunden. Dabei wird durch Aufbringen eines ausreichenden Öldrucks auf der Niederdruckseite oder durch Anbringen von Niederhaltern dafür gesorgt, dass die Kolben ständig an der Schrägscheibe anliegen. Solche Axialkolbenmaschinen sind in gleicher Weise als Hydraulikmotoren wie auch als Hydraulikpumpen einsetzbar.

Im Ausführungsbeispiel weisen die Kolben dabei Gleitschuhe 3 auf, welche über ein Kugelgelenk mit dem Kolbenkörper 4 der Kolben in Verbindung stehen und über welche die Kolben auf der Schrägscheibe gleiten.

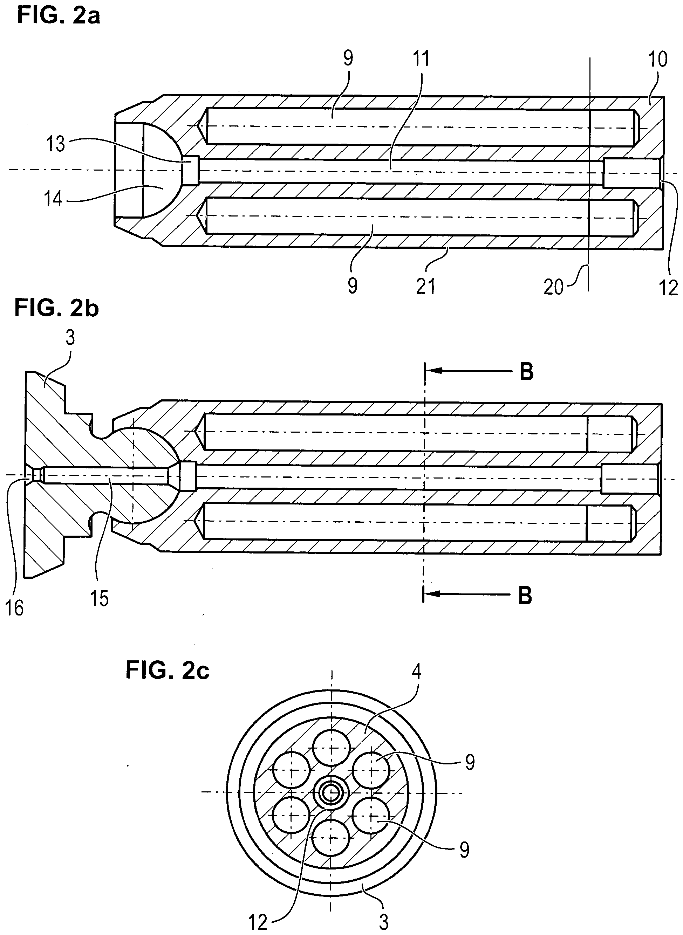

In Figuren 2 bis 4 sind drei Ausführungsbeispiele von Kolben gezeigt, wie sie bei der in Figur 1 gezeigten Axialkolbenmaschine zum Einsatz kommen. Der Kolbenkörper 4 weist dabei jeweils mehrere druckdicht verschlossene Kammern 9 auf, welche das Gewicht des Kolbenkörpers reduzieren, ohne Toträume zu schaffen. Die Kammern 9 sind dabei im Querschnitt, d.h. in einer Ebene, welche senkrecht auf der Längsachse des Kolbens steht, nebeneinander angeordnet. So verbleiben zwischen den einzelnen Kammern Stege, welche den Kolbenkörper stabilisieren.

Die Kammern werden in dem ersten Ausführungsbeispiel in Fig. 2 durch ein materialabtragendes Verfahren in ein einstückiges Basiselement 24 des Kolbenkörpers von der Arbeitsseite des Kolbenkörpers her eingebracht. Die zwischen den Kammern verbleibenden Stege bestehen damit ebenfalls aus dem Material des Kolbenkörpers. Der Kolbenkörper ist bevorzugt aus Stahl gefertigt.

Bei den Kammern handelt es sich in den Ausführungsbeispielen jeweils um hohlzylindrische Bohrungen mit einer kreisförmigen Grundfläche, welche sich axial im Kolbenkörper erstrecken. Wie insbesondere aus Figur 2c hervorgeht, sind die Bohrungen 9 um eine Mittelsäule des Kolbenkörpers angeordnet, welche so über die zwischen den Kammern verbleibenden Stege mit dem Außenumfang des Zylinderkörpers verbunden bleibt. Im Ausführungsbeispiel sind sechs Kammern vorgesehen, welche symmetrisch zur Mittelachse ringförmig um die Mittelsäule herum gruppiert sind.

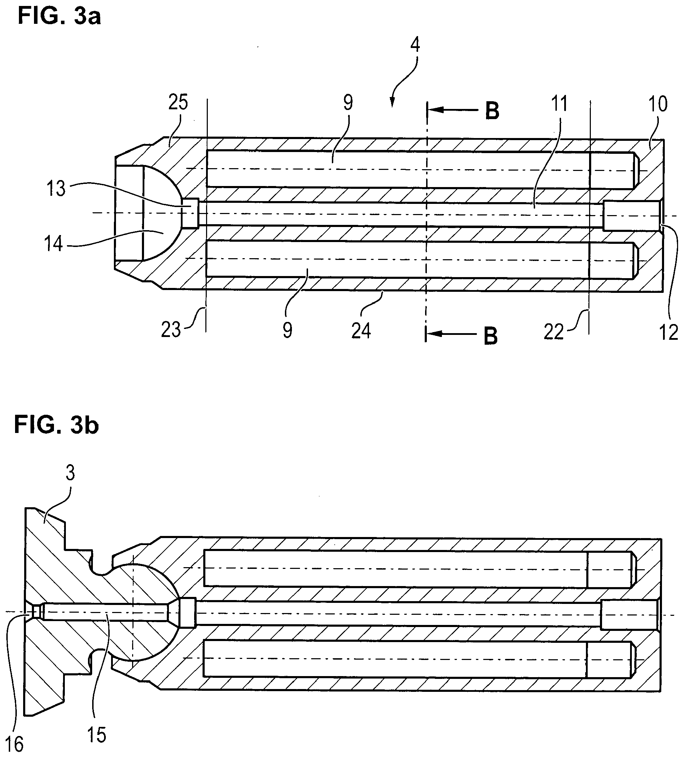

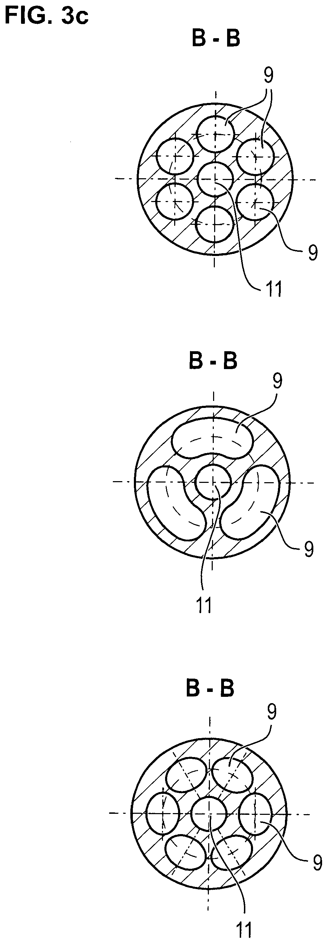

In einem zweiten Ausführungsbeispiel, welches in Fig. 3 dargestellt ist, werden die Kammern dagegen durch Umformung hergestellt. Dabei weist der Kolben 4 in axialer Richtung ein Mittelteil 24 auf, welches durch ein Umformverfahren hergestellt ist, insbesondere stranggepresst, kaltgewalzt, im Pilgerschrittverfahren hergestellt, geschmiedet oder als Rollprofil hergestellt.

In Fig. 3c sind dabei 3 exemplarische Querschnitte durch das Mittelteil gezeigt, welches zylinderförmige Kammern aufweist und vorteilhafterweise stranggepresst ist. Die Grundfläche der Kammern kann dabei, wie in den Figuren gezeigt, bsp. kreisförmig, nierenförmig oder oval ausgeführt sein. Das Mittelteil 24 ist dabei einteilig ausgeführt.

Alternativ kann das Mittelteil 24 auch mehrteilig sein, wobei mehre Elemente, aus welchem das Mittelteil gefertigt wird, in axialem (z. B. T-Stück in Rohr) oder radialem Sinn (mehr Platz für Längsprofilierung) ineinander eingreifen können, oder beides gleichzeitig.

Die durch Umformen erzeugte Struktur kann eine radiale, eine axiale oder eine Kombination aus einer radialen und axialen Struktur sein.

Das Mittelteil 24 ist auf seiner von der Arbeitsseite des Kolbens abgewandten Endfläche 23 mit einem Basisteil 25 verbunden, welches der Anlenkung an einem Gleitschuh 3 über ein Kugelkopfgelenk dient. Das Basisteil 25 ist dabei bevorzugt einstückig hergestellt und weist weiterhin vorteilhafterweise keine verschlossenen Hohlräume auf.

Unabhängig von der Herstellung weist der erfindungsgemäße Kolben dabei im Ausführungsbeispiel einen Gleitschuh auf, wobei ein am Gleitschuh 3 angeordneter Kugelkopf in einer halbkugelförmigen Aussparung 14 an der rückwärtigen Seite des Zylinderkörpers gelagert ist.

Durch die Mittelsäule verläuft ein Druckkanal 11, welcher von einer die Arbeitsfläche des Druckkolbens durchsetzenden Öffnung 12 zu einer im Bereich der Lagerung des Gleitschuhs angeordneten Öffnung 13 verläuft und durch einen Druckkanal 15 des Gleitschuhs fortgesetzt wird. Dieser Druckkanal 15 des Gleitschuhs endet in einer gleitflächenseitigen Öffnung 16, so dass die Gleitfläche über den Druckkanal mit der Zylinderkammer in Verbindung steht und so hydrostatisch entlastet wird. Weiterhin dient der Druckkanal zur Schmierung des Gleitschuhs.

Der Druckkanal 11 kann dabei ebenfalls durch eine Bohrung in den Zylinderkörper 4 eingebracht werden. Bei dem in Fig. 3 gezeigten Ausführungsbeispiel kann der Druckkanal zumindest im Bereich des Mittelteils 24 auf zusammen mit den Kammern 9 durch den Umformprozess hergestellt werden.

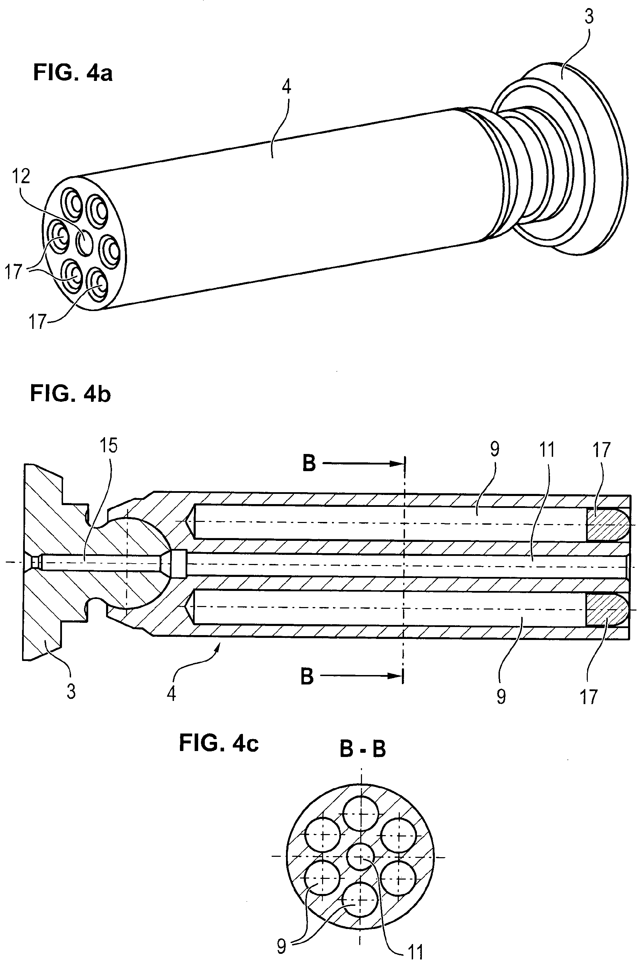

Die beiden in Figuren 2 und 3 gezeigten Ausführungsbeispiele unterscheiden sich von dem in Figur 4 gezeigten dritten Ausführungsbeispiel im Hinblick auf den Verschluss der Kammern 9.

Bei den in Figur 2 und 3 gezeigten Ausführungsbeispielen ist eine Endkappe 10 vorgesehen, welche auf das stirnseitige Ende 20 des Basiselementes 21 bzw. das stirnseitige Ende 22 des Mittelteils 24 aufgebracht wird, beispielsweise durch Schweißen. Die Endkappe 10 bildet dabei die gesamte Arbeitsfläche des Kolbens und verschließt als gemeinsames Verschlusselement sämtliche Kammern 9. Zentral durch die Verschlusskappe 10 ist der Druckkanal 11 geführt. Im Ausführungsbeispiel sind die Kammern 9 bis in die Endkappe 10 hinein verlängert, um das Gewicht weiter zu reduzieren.

Bei dem in Figuren 4 gezeigten Ausführungsbeispiel sind die Kammern 9 dagegen einzeln durch Stopfen 17 verschlossen, welche in die stirnseitigen Enden der Kammern 9 eingepresst sind. Die Arbeitsfläche wird daher, wie in Figur 4a gezeigt, durch das stirnseitige Ende des Basiselements bzw. des Mittelteils sowie durch die in diesem Basiselement bzw. Mittelteil angeordneten Stopfen gebildet. Anstelle von eingepressten Stopfen könnten bspw. auch Schraubelemente eingesetzt werden.

## Patentansprüche

1. Kolben für eine Axialkolbenmaschine, mit einem Kolbenkörper (4), welcher in seinem Inneren einen druckdicht verschlossenen Hohlraum aufweist,
wobei der Hohlraum in mehrere Kammern (9) aufgeteilt ist, zwischen welchen Stege verbleiben,
**dadurch gekennzeichnet,**
**dass** die Kammern (9) im Querschnitt des Kolbenkörpers (4) nebeneinander angeordnet sind und sich axial im Kolbenkörper (4) erstrecken und dass die Kammern (9) zur Arbeitsfläche des Kolbens hin jeweils einzeln durch separate Verschlusselemente (17) oder durch ein aufgebrachtes gemeinsames Verschlusselement (10) verschlossen sind.

2. Kolben nach Anspruch 1, wobei die Kammern (9) hohlzylindrisch geformt sind.

3. Kolben nach einem der vorangegangenen Ansprüchen, wobei die Kammern (9) durch materialabtragende Verfahren herstellbar sind, wobei es sich bei den Kammern (9) vorteilhafterweise um Bohrungen handelt, und/oder wobei der Kolbenkörper (4) ein einstückiges Basiselement (21) aufweist, in welches die Kammern (9) eingebracht sind.

4. Kolben nach einem der Ansprüche 1 oder 2, wobei der Kolbenkörper ein Mittelteil (24) aufweist, welches mit einem Basisteil (25) verbunden ist, wobei die Kammern (9) vorteilhafterweise in dem Mittelteil (24) angeordnet sind und/oder wobei das Mittelteil (24) und/oder die Elemente, aus welchen das Mittelteil (24) hergestellt wird, zumindest teilweise durch einen Umformprozess und/oder durch DMLS hergestellt sind und/oder wobei das Mittelteil (24) einstückig ist oder aus mehreren Elementen besteht.

5. Kolben nach einem der vorangegangenen Ansprüchen, wobei es sich bei den Verschlusselementen (17) um Stopfen oder Schraubelemente handelt.

6. Kolben nach einem der Ansprüche 1 bis 4, wobei es sich bei dem gemeinsamen Verschlusselement (10) um eine die Arbeitsfläche des Kolbens bildende Endkappe handelt, wobei die Kammern (9) vorteilhafterweise in die Endkappe (10) hineinreichen und/oder zumindest teilweise in dieser angeordnet sind.

7. Kolben nach einem der vorangegangenen Ansprüchen, wobei die Kammern (9) um eine Mittelsäule des Kolbenkörpers (4) angeordnet sind und/oder wobei die Anordnung der Kammern (9) symmetrisch oder asymmetrisch zur Mittelachse des Kolbenkörpers (4) ist.

8. Kolben nach einem der vorangegangenen Ansprüchen, wobei der Kolbenkörper (4) axial von einem Druckkanal (11) durchsetzt ist, wobei der Druckkanal (11) vorteilhafterweise in der Mittelsäule verläuft.

9. Kolben nach einem der vorangegangenen Ansprüchen, mit einem Gleitschuh (3), welcher mit dem Kolbenkörper (4) über ein Kugelgelenk verbunden ist, wobei der Kolbenkörper (4) vorteilhafterweise eine halbkugelförmige Aussparung (14) aufweist, in welche ein teilkugelförmiger Teil des Gleitschuhs (3) eingreift, wobei der Druckkanal (11) vorteilhafterweise in der halbkugelförmigen Aussparung endet und/oder wobei der Gleitschuh (3) ebenfalls einen Druckkanal (15) aufweist.

10. Axialkolbenmaschine mit einem oder mehreren Kolben (4) nach einem der vorangegangenen Ansprüche.

11. Verfahren zur Herstellung eines Kolbens nach einem der Ansprüche 1 bis 9, wobei die Kammern (9) durch ein materialabtragendes oder materialumformendes Verfahren hergestellt werden, wobei die Kammern (9) vorteilhafterweise von der Seite der Arbeitsfläche des Kolbens her in ein Basiselement (21) eingebracht werden und/oder wobei die Kammern (9) durch Bohren hergestellt werden.

12. Verfahren zur Herstellung eines Kolbens nach einem der Ansprüche 1 bis 9, wobei ein die Kammern (9) umfassender Abschnitt des Kolbens, insbesondere ein Mittelteil (24) des Kolbens, durch ein Umformverfahren hergestellt wird, insbesondere stranggepresst oder geschmiedet wird.

13. Verfahren zur Herstellung eines Kolbens nach einem der Ansprüche 1 bis 9, wobei der Kolben durch Verbinden eines Mittelteiles (24), in welchem die Kammern (9) angeordnet sind, mit einem Basisteil (25) hergestellt wird, wobei das Mittelteil (24) einstückig hergestellt oder aus mehreren Elementen zusammengesetzt wird.

14. Verfahren nach einem der vorangegangenen Ansprüche, wobei ein Druckkanal (11) des Kolbens ebenfalls durch ein materialabtragendes Verfahren, insbesondere durch Bohren, hergestellt wird.

## Claims

1. A piston for an axial piston machine, comprising a piston body (4) which in its interior includes a cavity closed in a pressure-tight way, wherein the cavity is divided into several chambers (9) between which webs are left,
**characterized in**
**that** the chambers (9) are arranged one beside the other in the cross-section of the piston body (4) and extend axially in the piston body (4) and that towards the working surface of the piston the chambers (9) each are individually closed by separate closure elements (17) or by an applied common closure element (10).

2. The piston according to claim 1, wherein the chambers (9) are formed hollow cylindrical.

3. The piston according to any of the preceding claims, wherein the chambers (9) can be manufactured by material-removing methods, wherein the chambers (9) advantageously are bores, and/or wherein the piston body (4) includes an integral base element (21) in which the chambers (9) are incorporated.

4. The piston according to any of claims 1 or 2, wherein the piston body includes a middle part (24) which is connected to a base part (25), wherein the chambers (9) advantageously are arranged in the middle part (24) and/or wherein the middle part (24) and/or the elements of which the middle part (24) is made are at least partly manufactured by a forming process and/or by DMLS, and/or wherein the middle part (24) is made in one piece or consists of several elements.

5. The piston according to any of the preceding claims, wherein the closure elements (17) are plugs or screw elements.

6. The piston according to any of the claims 1 to 4, wherein the common closure element (10) is an end cap forming the working surface of the piston, wherein the chambers (9) advantageously reach into the end cap (10) and/or at least partly are arranged in the same.

7. The piston according to any of the preceding claims, wherein the chambers (9) are arranged about a central column of the piston body (4) and/or wherein the arrangement of the chambers (9) is symmetrical or asymmetrical to the middle axis of the piston body (4).

8. The piston according to any of the preceding claims, wherein the piston body (4) is axially traversed by a pressure channel (11), wherein the pressure channel (11) advantageously extends in the central column.

9. The piston according to any of the preceding claims, comprising a slipper (3) which is connected to the piston body (4) via a ball joint, wherein the piston body (4) advantageously includes a hemispherical cutout (14) into which a partly spherical part of the slipper (3) engages, wherein the pressure channel (11) advantageously ends in the hemispherical cutout and/or wherein the slipper likewise includes a pressure channel (15).

10. An axial piston machine comprising one or more pistons (4) according to any of the preceding claims.

11. A method for manufacturing a piston according to any of claims 1 to 9, wherein the chambers (9) are made by a material-removing or material-forming method, wherein the chambers (9) advantageously are incorporated into a base element (21) from the side of the working surface of the piston and/or wherein the chambers (9) are made by drilling.

12. The method for manufacturing a piston according to any of claims 1 to 9, wherein a portion of the piston comprising the chambers (9), in particular a middle part (24) of the piston, is made by a forming method, in particular extruded or forged.

13. The method for manufacturing a piston according to any of claims 1 to 9, wherein the piston is made by connecting a middle part (24), in which the chambers (9) are arranged, to a base part (25), wherein the middle part (24) is made in one piece or is put together of several elements.

14. The method according to any of the preceding claims, wherein a pressure channel (11) of the piston likewise is made by a material-removing method, in particular by drilling.

## Revendications

1. Piston pour une machine à pistons axiaux, comportant un corps de piston (4), qui dans son intérieur possède une cavité fermée de manière étanche à la pression, la cavité étant divisée en plusieurs chambres (9), entre lesquelles des nervures ont été laissées,
**caractérisé en ce que**
les chambres (9) sont agencées côte à côte en section transversale du corps de piston (4) et s'étendent axialement dans le corps de piston (4) et que vers la surface de travail du piston les chambres (9) sont chacune individuellement fermées par des éléments de fermeture (17) séparés ou par un élément commun (10) appliqué.

2. Piston selon la revendication 1, dans lequel les chambres (9) ont une forme cylindrique creuse.

3. Piston selon l'une quelconque des revendications précédentes, dans lequel les chambres (9) peuvent être fabriquées par des procédés d'enlèvement de matière, les chambres (9) étant avantageusement des alésages, et/ou dans lequel le corps de piston (4) possède un élément de base (21) fait d'une seule pièce, dans lequel les chambres (9) sont incorporées.

4. Piston selon l'une quelconque des revendications 1 ou 2, dans lequel le corps de piston possède une partie centrale (24), qui est reliée à une partie de base (25), les chambres (9) étant agencées avantageusement dans la partie centrale (24), et/ou dans lequel la partie centrale (24) et/ou les éléments, à partir desquels la partie centrale (24) est fabriquée, sont fabriqués au moins partiellement par un processus de formage et/ou par DMLS et/ou dans lequel la partie centrale (24) est faite d'une seule pièce ou est constituée de plusieurs éléments.

5. Piston selon l'une quelconque des revendications précédentes, dans lequel les éléments de fermeture (17) sont des obturateurs ou des éléments à visser.

6. Piston selon l'une quelconque des revendications 1 à 4, dans lequel l'élément de fermeture (10) commun est un capuchon d'extrémité formant la surface de travail du piston, les chambres (9) s'étendant avantageusement dans le capuchon d'extrémité (10) et/ou sont agencées au moins partiellement dans celui-ci.

7. Piston selon l'une quelconque des revendications précédentes, dans lequel les chambres (9) sont agencées autour d'une colonne centrale du corps de piston (4) et/ou dans lequel l'agencement des chambres (9) est symétrique ou asymétrique par rapport à l'axe central du corps de piston (4).

8. Piston selon l'une quelconque des revendications précédentes, dans lequel le corps de piston (4) est traversé axialement par un canal de pression (11), le canal de pression (11) s'étendant avantageusement dans la colonne centrale.

9. Piston selon l'une quelconque des revendications précédentes, comportant un patin coulissant (3), qui est relié au corps de piston (4) par un joint à rotule, le corps de piston (4) possédant avantageusement un évidement hémisphérique (14), dans lequel s'engage une partie partiellement sphérique du patin coulissant (3), le canal de pression (11) se terminant avantageusement dans l'évidement hémisphérique et/ou le patin coulissant (3) possédant également un canal de pression (15).

10. Machine à pistons axiaux comportant un ou plusieurs pistons (4) selon l'une quelconque des revendications précédentes.

11. Procédé de fabrication d'un piston selon l'une quelconque des revendications 1 à 9, dans lequel les chambres (9) sont fabriquées par un procédé d'enlèvement de matière ou de formage de matière, les chambres (9) étant incorporées dans un élément de base (21) avantageusement à partir du côté de la surface de travail du piston et/ou les chambres (9) étant fabriquées par forage.

12. Procédé de fabrication d'un piston selon l'une quelconque des revendications 1 à 9, dans lequel un tronçon du piston comportant les chambres (9), en particulier une partie centrale (24) du piston, est fabriqué par un procédé de formage, en particulier est extrudé ou forgé.

13. Procédé de fabrication d'un piston selon l'une quelconque des revendications 1 à 9, dans lequel le piston est fabriqué en reliant une partie centrale (24), dans laquelle les chambres (9) sont agencées, à un élément de base (25), la partie centrale (24) étant fabriqué d'une seule pièce ou étant composé de plusieurs éléments.

14. Procédé selon l'une quelconque des revendications précédentes, dans lequel un canal de pression (11) du piston est fabriqué également par un procédé d'enlèvement de matière, in particulier par alésage.
